# EUROPEAN PATENT SPECIFICATION

(11) **EP 1 880 350 B1**
(45) Date of publication and mention of the grant of the patent: **22.06.2011**
(21) Application number: 06757439.2
(22) Date of filing: 13.04.2006
(51) Int. Cl.: G06K 19/07

(54) **CONTACTLESS TYPE INTEGRATED CIRCUIT CARD AND METHOD FOR COMMUNICATING DATA BY MULTIPROTOCOL**
INTEGRIERTE SCHALTUNGSKARTE DES KONTAKTLOSEN TYPS UND VERFAHREN ZUM ÜBERMITTELN VON DATEN DURCH MULTIPROTOKOLL
CARTE A CIRCUIT INTEGRE DU TYPE SANS CONTACT ET PROCEDE DE COMMUNICATION DE DONNEES AU MOYEN DE PLUSIEURS PROTOCOLES

(30) Priority: 15.04.2005 KR 20050031241
(43) Date of publication of application: 23.01.2008
(73) Proprietor: KTFreetel Co., Ltd., Songpa-gu Seoul 138-703 (KR)
(72) Inventor: NA, Jun-Chae, Seoul 157-202 (KR); KIM, Min-Jeoung, Seoul 151-056 (KR); KIM, Kyung-Tae, Seoul 135-100 (KR)
(74) Representative: Tomlinson, Kerry John
(86) International application number: PCT/KR2006/001360
(87) International publication number: WO 2006/110000

(56) References cited:
- WO-A1-02/31762
- US-A1- 2004 164 170
- US-A1- 2004 213 169
- US-A1- 2005 056 704

## Description

### Technical Field

The present invention relates to a contactless type integrated circuit (IC) card for supporting a plurality of protocols to communicate with a card terminal and a method of communicating thereof.

**Background Art**

A contactless type integrated circuit card (IC) denotes a card capable of exchanging data with a card terminal without being contacted to the card terminal. That is, the contactless type IC card communicates with the card terminal using self-generated power in response to a radio frequency (RF) signal transmitted from the card terminal.

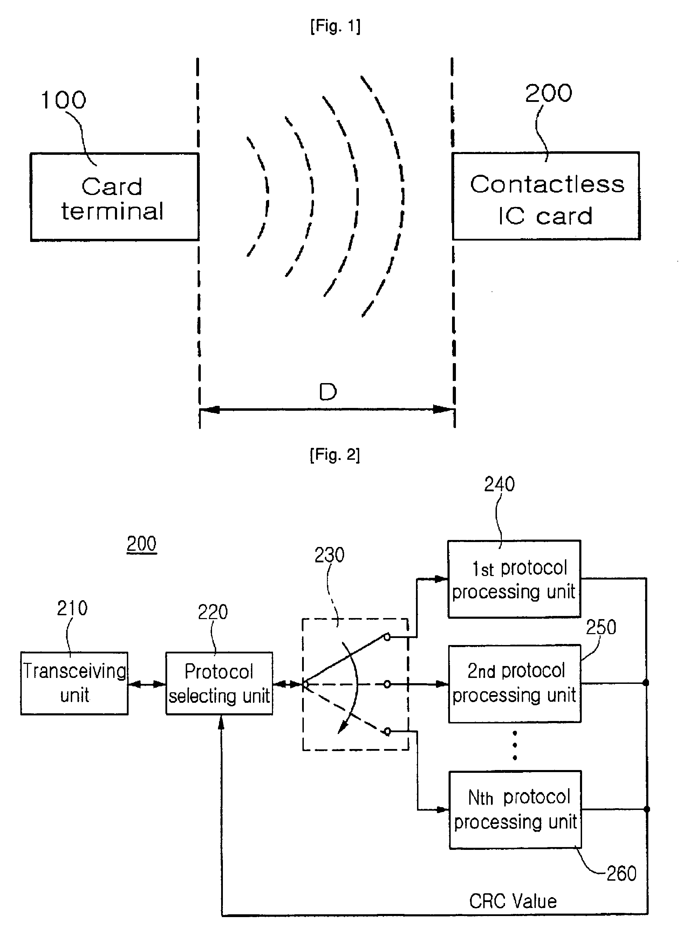

FIG. 1 is a block diagram showing a conventional method of recognizing a contactless type IC card. Referring to FIG. 1, a card terminal 100 generates a radio frequency (RF) signal, transmits the RF signal and communicates with a contactless type IC card 200 separated at a predetermined distance D from the card terminal 100 using the RF signal.

The RF signal transmitted from the card terminal 10 induces the contactless type IC card 200 to self-generate power to communicate with the card terminal.

In order to communicate, the card terminal 100 and the contactless type IC card 200 must employ a predetermined communication standard. That is, the contactless IC card using a 13.56MHz of shortwave may be classified by a distance from the card terminal into a close range such as 10cm or an adjacent range such as 1m. The close range noncontact type IC card employs a communication protocol standard ISO/IEC 14443 and is further classified into a type A and a type B according to the communication protocol. A non-standard protocol MIFARE is also included in the close range contactless IC card. The adjacent range contactless IC card employs a communication protocol standard ISO/IEC 15693.

The close range contactless type IC card may be embodied as a bus fare card, a phone card or a prepaid card. The adjacent range IC card may be embodied as an ID card for entering a specific gate, as a certification or as a card for managing products.

As described above, the standards of the contactless IC cards, ISO/IEC 14443 and ISO/IEC 15863, have different application fields and employ different wireless communication protocols according to the distance from the card terminal.

However, the conventional way of communication between the contactless type IC card and the card terminal has a limitation. That Is, a service provider must select one of the standards to provide a target service using a contactless IC card. Therefore, the service provider must manufacture systems providing the target service In various types for supporting different protocols.

In order to receive various services provided with a contactless IC card, a user must use different contactless type IC cards according to a target service.

For example, a bus fare auto paying service using a contactless IC card employing the ISO 14443 type A was already available in Seoul, Korea. If a service provider wants to provide another bus fare auto-paying service using an adjacent range contactless IC card supporting Mifare in Seoul Korea, the service provider must provide a backbone system such as a new reader and a new contactless IC card supporting ISO 15693 although the backbone systems supporting the ISO 14443 type A were already provided in Seoul, Korea. Therefore, there is a limitation to provide various contactless IC card services.

US 2004/0213169 discloses a contactless integrated circuit with a means for sending/receiving data by inductive coupling means for providing a communication according to at least two determined protocols, and a means for automatically switching into a communication mode conforming to one of the at least two protocols depending on the profile of a start frame received at the beginning of the communication.

### Disclosure of Invention

### Technical Problem

An object of the present invention is to provide a contactless IC card for supporting various protocols to communicate with a card terminal.

Another object of the present invention is to provide a method of communicating between a card terminal and a contactless IC card using a plurality of protocols.

### Technical Solution

In order to achieve the above objects, the present invention provides a contactless IC (integrated circuit) card capable of using a plurality of protocol for data communication, including: a transceiving unit for transmitting and receiving a radio frequency signal to/from a card terminal using a plurality of protocols; a plurality of protocol processing units for processing signals received through the transceiving unit according to corresponding protocols; and a protocol selecting unit for transmitting a request signal received through the transceiving unit to the plurality of the protocol processing units, receiving data error check values from the plurality of the protocol processing units and selecting one of the protocol processing units to be used for communicating with the card terminal corresponding to the received signal based on the data error check value.

The contactless IC card may further include a switch for deciding a data transmit path to selectively transmit the signal from the card terminal to the protocol processing unit selected by the protocol selecting unit. The switch may switch the plurality of the protocol processing units at a predetermined cycle in response to the protocol selecting unit until one of the protocol processing units is selected.

The transceiving unit may include an antenna coil made of a winded thin wire for generating an inductive power in response to a radio frequency signal of the card terminal.

Each of the protocol processing units may include: a memory for storing a signal received at the corresponding protocol processing unit from the card terminal and a signal transmitted to the card terminal from the protocol processing unit; a modulating/demodulating unit for modulating or demodulating a signal used in the protocol processing unit and another signal used in the card terminal using protocol information of corresponding protocol processing unit; a data detecting unit for extracting essential information from the information stored in the memory and transmitting the extracted information to the modulating/demodulating unit; and an error checking unit for checking an error on the modulated data and transmitting the result of the checking error to the protocol selecting unit.

In order to achieve the above objects, the present invention also provides a method of communications using a contactless IC card capable of data communication through a plurality of protocols, the method including the steps of: a) transiting the state of the contactless IC card to a power-on state by generating an inductive power inside the contactless IC card in response to a radio frequency signal outputted from a card terminal; b) transmitting a request signal received from the card terminal to the plurality of the protocol processing units, receiving data error check values from the plurality of the protocol processing units and selecting one of the protocol processing units corresponding to the protocol of the received signal, based on the data error check value; and c) performing operations to communicate with the card terminal using a protocol corresponding, to the decided protocol processing unit.

The step b) for selecting a protocol may include the steps of: b-1) transferring the request signal from the card terminal to a plurality of the protocol processing units; b-2) modulating the request signal based on a corresponding protocol at each of the protocol processing units; b-3) performing an error checking process on the modulated request signal at each of the protocol processing units; and b-4) selecting one of protocols that is used to transmit the request signal based on the result of performing the error check.

The error checking process may be a cyclic redundancy check (CRC) performed on the modulated data.

The present invention also provides a computer readable recording medium storing a program for communicating between a card terminal and a contactless IC card capable of using a plurality of protocols to communicate, comprising:
transmitting a request signal received from the card terminal to the plurality of the protocol processing units, receiving data error check values from the plurality of the protocol processing units and selecting one of the protocol processing units corresponding to the protocol of the received signal, based on the data error check value; and
performing operations to communicate between the card terminal and the contactless IC card using the protocol corresponding to the request signal based on the result of the determination.

### Advantageous Effects

The contactless IC card according to the present invention Is capable of using a plurality of protocols for data communication. Therefore, the service provider is allowed to conveniently provide services related to the contactless IC card and the user is also allowed to conveniently use various services related to the contactless IC card. That is, various services using the contactless IC card may be provided according to the present invention.

### Brief Description of Drawings

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a block diagram showing a conventional method of recognizing a contactless type IC card;
FIG. 2 Is a block diagram illustrating a contactless IC card according to an embodiment of the present invention;
FIG. 3 is a block diagram illustrating a protocol processing unit according to an embodiment of the present invention;
FIG. 4 is a schematic flowchart of a method of deciding a protocol to communicate with a card terminal supporting a multiprotocol In a contactless type IC card according to an embodiment of the present invention;
FIG. 5 is a flowchart illustrating a method of communicating in a contactless IC card according to an embodiment of the present invention;
FIG. 6 is a graph showing intensities of electromagnetic fields according to a distance in RF protocols using 13.56 MHz;
FIG. 7 is a flowchart illustrating a method of deciding a protocol to communicate with a card terminal supporting multiprotocol in a contactless IC card which is not an embodiment of the present invention and is included for explanatory purposes only;
FIG. 8 is a flowchart illustrating a method of deciding a protocol to communicate with a card terminal supporting multiprotocol in a contactless IC card which is not an embodiment of the present invention and is included for explanatory purposes only; and
FIG. 9 shows a format of a response signal message according to ISO 7618-3 of a protocol processing unit for a request signal of a card terminal.

### Best Mode for Carrying out the invention

Reference will now be made in detail to the preferred embodiments of the present invention, examples of which are illustrated in the accompanying drawings.

FIG. 2 is a block diagram illustrating a contactless IC card according to an embodiment of the present Invention.

Referring to FIG. 2, the contactless IC card 200 according to the present embodiment includes a transceiving unit 210, a protocol selecting unit 220, a switch 230, and a plurality of protocol processing units 240 to 260.

The transceiving unit 210 receives a radio frequency (RF) signal transmitted from a card terminal (not shown) and generates an inductive power to drive the contactless IC card 200. In order to generate the inductive power, the transceiving unit 210 includes an antenna coll (not shown) made of a winded thin wire. Especially, it is preferable that the antenna coil may be included inside the contactless IC card. The antenna coil generates the inductive power using the RF signal transmitted from the card terminal. The generated inductive power transits the state of the contactless IC card 200 into a power-on state.

The protocol selecting unit 220 receives a request signal from the transceiving unit 210 and transmits the received request signal to a plurality of the protocol processing units 240, 250 and 260. The protocol selecting unit 220 receives a data error check value, for example, cyclic redundancy check (CRC), from each of the protocol processing units 240, 250 and 260 as a response of the request signal, and selects one of the protocol processing units 240, 250 and 260 based on the data error check value.

As shown In FIG. 2, the contactless IC card 200 includes the switch 230 between the protocol selecting unit 220 and a plurality of protocol processing units 240, 250 and 260. The switch 230 selectively transmits the output of the protocol selecting unit 220 to one of the protocol processing units 240, 250 and 260. The switch 230 is controlled in response to the protocol selecting unit 220, and the switch 230 connects the protocol selecting unit 220 to a selected one of the protocol processing units 240, 250 and 260. There is no limitation to selectively connect the protocol selecting unit 220 and one of the protocol processing units 240, 250 and 260. As shown in FIG. 2, the present embodiment uses a method of using the switch 230 to alternatively connect the protocol selecting unit 220 to one of the protocol processing units 240, 250 and 260 at a predetermined cycle is shown. However, the present invention is not limited by the switching operation of the switch 230 shown in FIG. 2.

When the transceiving unit 210 receives the request signal, the protocol selecting unit 220 transmits the received request signal to all of the protocol processing units 240, 250 and 260. The protocol processing units 240, 250 and 260 receive the request signal and feed the error check values back to the protocol selecting unit 220 as the response of the request signal. The protocol selecting unit 220 decides one of the protocol processing units 240, 250 and 260 to perform the data communication between the contactless IC card to the card terminal based on the feed-back error check values from the protocol processing units 240, 250 and 260.

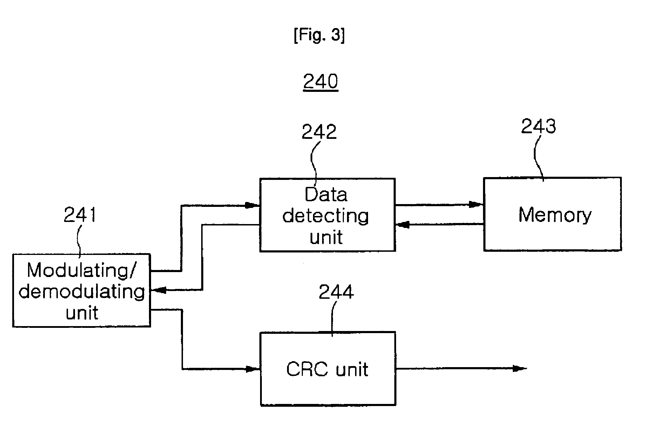

FIG. 3 is block diagram illustrating a protocol processing unit according to an embodiment of the present invention. Herein, a plurality of the protocol processing units 240, 250 and 260 is driven by different protocols. The present invention is not limited by the number and the arrangement of the protocol processing units. Therefore, the number and the arrangement of the protocol processing units may be decided by those skilled in the art without departing from the scope and spirit of the invention.

Referring to FIG. 3, the protocol processing unit includes a modulating/demodulating unit 241, a data detecting unit 242, a memory 243 and a CRC unit 244.

When the protocol processing unit 240 receives the request signal from the transceiving unit 210 through the protocol selecting unit 220, the modulating/demodulating unit 241 modulates the request signal and transmits the modulated request signal to the data detecting unit 242. Also, the modulating/demodulating unit 241 demodulates data transmitted to the card terminal 100. Herein, the modulating/demodulating unit 241 uses protocol information supported by the corresponding protocol processing unit for modulating/ demodulating signals.

The data detecting unit 242 detects essential information from information stored in the memory using the modulated signal from the modulating/demodulating unit 241 and transmits the detected information to the modulating/demodulating unit 241. For example, if a card terminal requests the traffic fare charging information stored in the memory 243, the data detecting unit 242 extracts the traffic fare charging information from the memory 243 and transits the extracted information to the modulating/demodulating unit 241.

The memory 243 stores data received/transmitted from/to a card terminal through a protocol supported by the corresponding protocol processing unit. For example, if the protocol processing unit supports ISO/IEC 14443 type A, the memory 243 stores information related a traffic fare card such as charging or bus fare in order to use a traffic fare automatic paying service driven by the protocol ISO/IEC 14443 type A supported by the,protocol processing unit.

The CRC unit 244 performs a cyclic redundancy check (CRC) on an input signal to determine whether there is error included in the input signal which is modulated through the modulating/ demodulating unit 241. That is, it determines whether the input signal is transmitted using a protocol supported by a corresponding protocol processing unit or not. The CRC unit 244 feeds the result, for example, a CRC value, back to the protocol selecting unit 220. For example, if the first protocol processing unit 240 supports the protocol ISOIIEC 14443 type A and the request signal created based on the ISO/IEC 14443 type A is received from the card terminal, the CRC unit 244 determines that there is no error. However, if the first protocol processing unit 240 supports ISO/IEC 14443 type A and a request signal created based on the ISO/IEC 15693 is received from the card terminal, the CRC unit 244 determines that there is the error in the request signal.

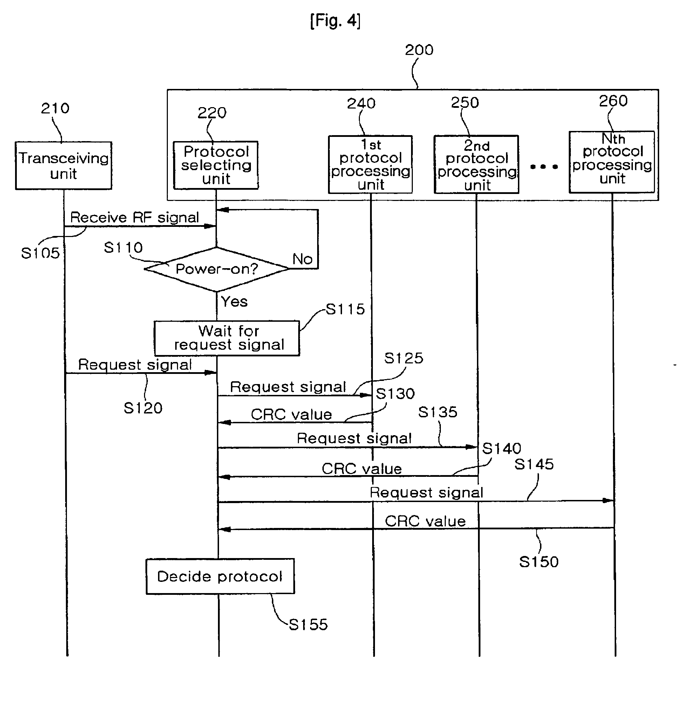

FIG. 4 is a schematic flowchart showing a method of deciding a protocol to communicate with a card terminal supporting a multiprotocol at a contactless type IC card according to an embodiment of the present invention.

At first, if the contactless IC card 200 according to the present embodiment receives a RF signal from the card terminal 100 at step S105, the antenna coil (not shown) included in the transceiving unit 210 of the contactless IC card 200 generates the inductive power and the state of the contactless IC card 200 is transited to the power-on state at step S110.

The protocol selecting unit 220 waits to receive a request signal from the card terminal 100 at step S115. When the protocol selecting unit 220 receives the request signal from the card terminal 100 at step S120, the protocol selecting unit 220 transmits the received request signal to all of the first protocol processing unit 240, the second protocol processing unit 250 and the third protocol processing unit 260 at steps S125, S135 and S145. The first protocol processing unit 240, the second protocol processing unit 250 and the third protocol processing unit 260 modulate the request signal using the corresponding protocols and feed the result of checking the error back to the protocol selecting unit 220 at step S130, S140 and S150.

The protocol selecting unit 220 receives the CRC values from each of the protocol processing units 240, 250 and 260 and decides the protocol to be used for communicating with the card terminal 100 using the CRC values at step S155. That is, the protocol selecting unit 220 detects a CRC value having no error among the received CRC values from the protocol processing units 240, 250 and 260. Then, the protocol selecting unit 220 decides the protocol used in the protocol processing unit that transmits the CRC value with no error as a protocol to be used for communicating with the card terminal 100. Then, the protocol selecting unit 220 and the corresponding protocol processing unit transmitting the detected CRC value are connected (not shown).

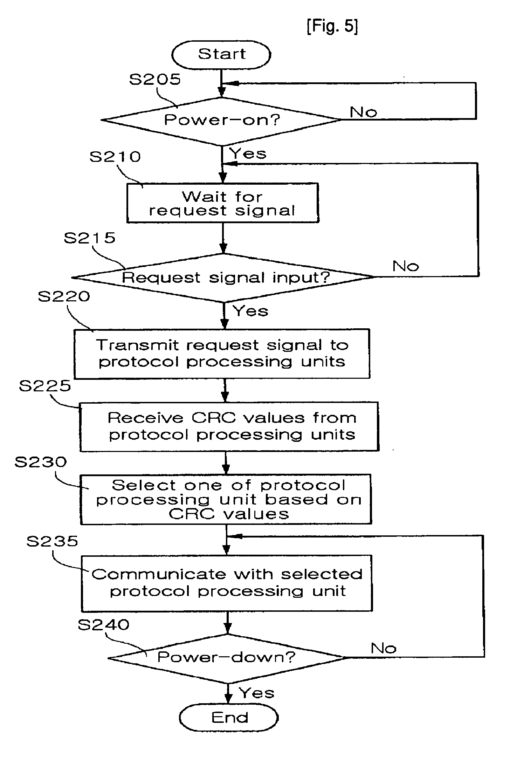

FIG. 5 is a flowchart illustrating a method of communicating between a contactless IC card and a card terminal according to an embodiment of the present invention. Especially, FIG. 5 is a flowchart showing a data communication process between the contactless IC card capable of communicating through a plurality of protocols and the card terminal using a predetermined protocol.

When the contactless IC card-200 comes near to the card terminal 100, the contactless IC card 200 generates the inductive power using the RF signal transmitted from the card terminal, and the state of the contactless IC card 200 is transited to the power-on state by the generated inductive power at step S205. The contactless IC card 200 waits to receive a request signal from the card terminal 100 at step S210.

When the contactless IC card 200 receives the request signal from the card terminal 100 at step S215, the protocol selecting unit 230 transmits the request signal to the all of the protocol processing units 240, 250 and 260 in the contactless IC card 200 at step S220. And, the protocol selecting unit 230 receives the error check values, for example, a CRC value, from the protocol processing units 240, 250 and 260 as a response of the request signal at step S225.

The contactless IC card 200 selects one of the protocol processing units to be used to communicate to the card terminal 100 based on the error check values at step S230. That is, the contactless IC card 200 selects the protocol processing unit that transmits the error check value with no error as a protocol processing unit to be used for communicating to the card terminal.

After selecting the protocol processing unit for communicating to the card terminal 100, the data communication to the card terminal 100 is performed using the selected protocol processing unit at step S235.

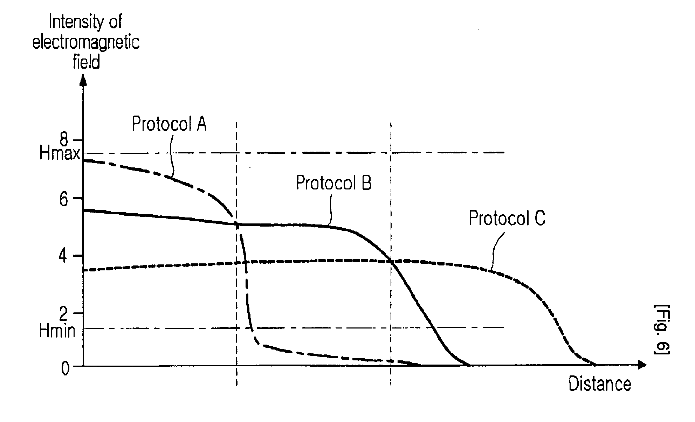

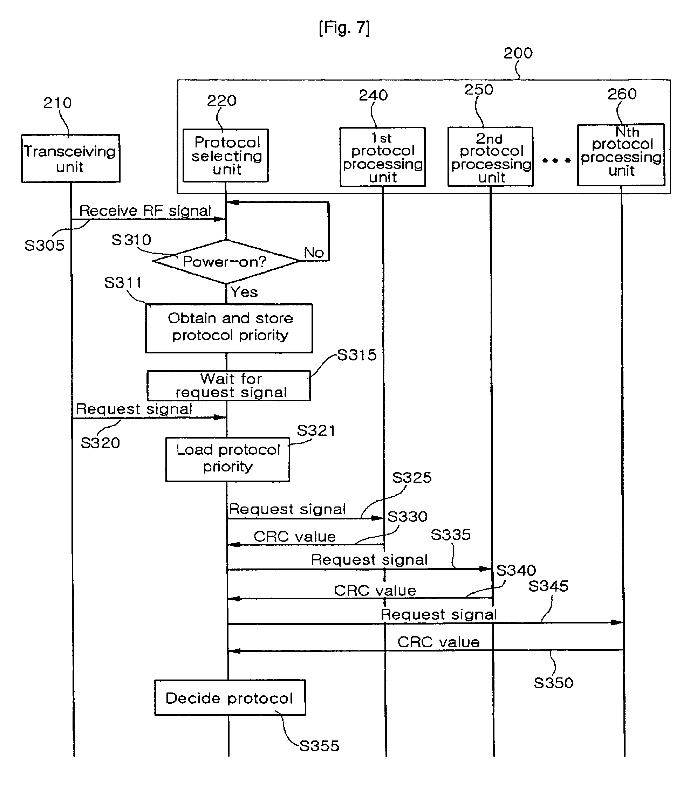

FIG. 6 is a graph showing intensities of electro-magnetic fields according to a distance in RF protocols using 13.56 MHz, and FIG. 7 is a flowchart illustrating a method of deciding a protocol to communicate with a card terminal supporting multiprotocol in a contactless IC card which Is not an embodiment of the present invention.

In the graph shown In FIG. 6, a protocol A may be ISO 14443 type A and type B, a protocol B may be AFC and a protocol C may be ISO 15693. As shown in FIG. 6, the intensities of the electromagnetic fields of each protocol are different not only according to a distance but also according to each protocol.

In FIG. 7, if the contactless IC card 200 receives the RF signal from the card terminal 100 at step S205, the antenna coil (not shown) included in the transceiving unit 210 of the contactless IC card 200 generates the inductive power and the contactless IC card 200 is transited to the power-on state at step S310.

Then, the protocol selecting unit 200 decides a protocol priority based on the intensity of the electromagnetic field received from the transceiving unit 210 and stores the decided protocol priority at step S311. The protocol priority is decided according to a relation between a type of protocol and Intensity thereof. For example, if the intensity of the electromagnetic field received from the transceiving unit 210 is about 7H, the protocol priority is decided in an order of the protocol A, the protocol B and the protocol-C as shown in the graph of FIG. 6.

After storing the protocol priority, the protocol selecting unit 220 waits to receive a request signal from the card terminal 100 at step S315. If the contactless IC card 200 receives the request signal from the card terminal 100 at step S320, the protocol selecting unit 220 reads the stored protocol priority information at step S321 and transmits the request signal to the protocol processing units in the order of the protocol priority at steps S325, S335 and S345. That is, a test is preferentially performed on a protocol processing unit corresponding to the selected protocol by previously estimating a protocol to be used for the data communication between the contactless IC card 200 and the card terminal supporting the contactless communication protocol according to the intensity of the electro-magnetic filed outputted from the card terminal. Therefore, the data communication between the card terminal and the contactless IC card is further quickly established according to the present embodiment.

The first protocol processing unit 240, the second protocol processing unit 250 and the third protocol processing unit 260 modulate the request signals using corresponding protocols and feed the result of checking the error in the modulated signals, for example, a CRC, back to the protocol selecting unit 220 at steps S130, S140 and S150.

The protocol selecting unit 220 receives the CRC values from the protocol processing units 240, 250 and 260 and decides a protocol to be used for data communication to the card terminal 100 using the CRC values at step S155. That is, the protocol selecting unit 220 selects a CRC value having no error among the received CRC values and selects a protocol supported by the protocol processing unit that transmits the selected CRC value as a protocol to be used for data communication with the card terminal. Then, the protocol processing unit transmitting the selected CRC value is connected to the protocol selecting unit 220 (not shown).

For example, if the CRC value from the first protocol processing unit 240 does not include the error, the protocol supported by the first protocol processing unit 240 Is decided for data communication between the card terminal 100 and the contactless IC card 200. Herein, if the first protocol processing unit 240 responses a message noticing there is no error, it is preferable to connect the protocol selecting unit 200 and the first protocol processing unit 240 without waiting to receive the CRC values from the second protocol processing unit 250 and the n^{th} protocol processing unit 260.

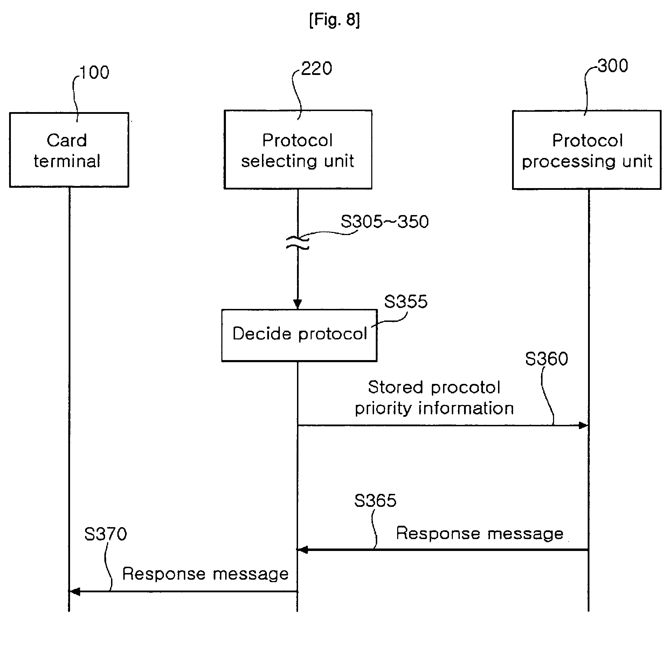

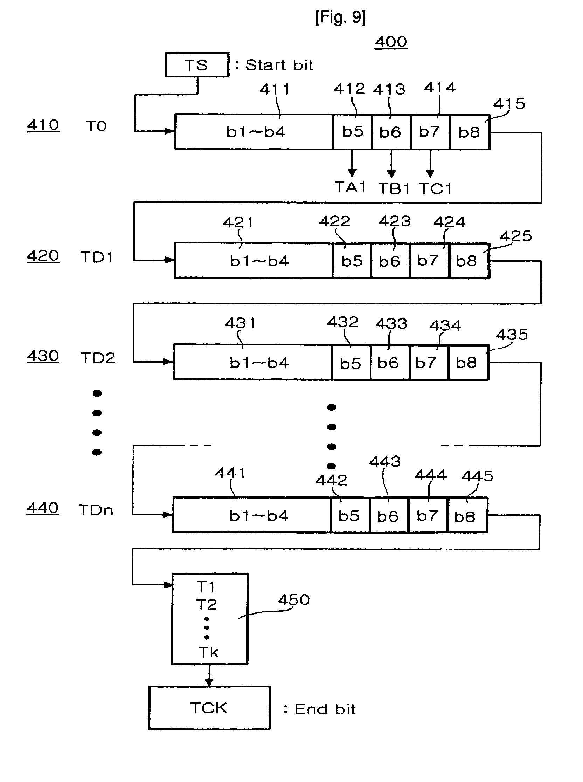

FIG. 8 is a flowchart illustrating a method of deciding a protocol to communicate with a card terminal supporting multiprotocol in a contactless IC card, and FIG. 9 shows a format of a response signal message according to ISO 7618-3 of a protocol processing unit for a request signal of a card terminal.

Steps for deciding a protocol to communicate with a card terminal supporting multiprotocol in FIG. 8 are identical or similar to the steps S305 to S355 shown in FIG. 6.

After the protocol selecting unit 220 decides the protocol processing unit 300 corresponding to the protocol to b.e used to communicate with the card terminal supporting the multiprotocol at step S355, it determines whether the decided protocol is matched with the protocol priority at step S360. The protocol priority is obtained at the step S311 and the protocol having higher priority denotes a protocol having a superior recognizing rate in the communication between the contactless IC card 200 and the card terminal supporting the multiprotocol. The protocol selecting unit 220 transmits the protocol priority information obtained in step S311 to the decided protocol processing unit 300 at step S365. Herein, it is preferable that the protocol selecting unit 220 only transmits the protocol priority information to the decided protocol processing unit 300 if the protocol decided at the step S355 is different from the protocol having high priority in the step S311.

Then, the protocol processing unit 300 selected by the protocol selecting unit 220 creates a response message for the request message from the card terminal 100 and transmits the created response message to the protocol selecting unit 220 at step S370 and the protocol selecting unit 220 transmits the response message to the card terminal 100 at step S375.

FIG. 9 shows a format of a response signal message according to ISO 7618-3 of a protocol processing unit for a request signal of a card terminal.

A response signal message 400 includes state Information of the contactless IC card, basically. Such an information is included In trailer data T0 410, T1, T2, ... Tk 450. Herein, the response signal message 400 includes the protocol priority information TD1 420, TD2 430,~ TDn 440 between T0 410 and T1, ... and T(k-1) and Tk. First four bits 421, 431 and 441 of the TD1 420, TD2 430, ~ TDn 440 are information related to the protocol and following bits 422 to 425, 432 to 435 and 442 to 445 are state information related to the first four bits 421, 431 and 441.

If the response message from the protocol processing unit 300 includes the protocol priority information generated at the step S311, it is preferable that the card terminal 100 may communicate with the contactless IC card a protocol selected based on the protocol priority generated from the step S311; Accordingly, it is preferable that the card terminal may transmit the request signal according to the protocol having a superior recognizing rate based on the protocol priority of the step S311 to the contactless IC card again.

The above-described method according to the present invention can be embodied as a program and stored on a computer readable recording medium. The computer readable recording medium is any data storage device that can store data which can be thereafter read by the computer system. The computer readable recording medium includes a read-only memory (ROM), a random-access memory (RAM), a CD-ROM, a floppy disk, a hard disk, an optical magnetic disk, and carrier waves such as data transmission through the lnternet. The computer-readable recording medium can also be distributed over network-coupled computer systems so that the computer-readable code is stored and executed in a distributed fashion. Also, functional programs, codes, and code segments for accomplishing the present invention can be easily construed by programmers skilled in the art to which the present invention pertains.

Also, the present invention may be applied not only to a contactless communication protocol using a 13.56MHz of the RF signal but also to a communication protocol using a 900MHz or other frequency bands of the RF signal.

It will be apparent to those skilled in the art that various modifications and variations can be made in the present invention. Thus, it is intended that the present invention covers the modifications and variations of this Invention provided they come within the scope of the appended claims and their equivalents.

## Claims

1. A contactless IC (integrated circuit) card (200) capable of data communication using a protocol selected from a plurality of protocols, comprising:
a transceiving unit (210) for transmitting and receiving a radio frequency signal to/from a card terminal using a protocol selected from a plurality of protocols;
a plurality of protocol processing units (240, 250, 260) for processing signal received through the transceiving unit (210), according to distinguished protocol respectively; and
a protocol selecting unit (220) for transmitting a request signal received through the transceiving unit (210) to the plurality of the protocol processing units(240, 250, 260);
**characterised by** the transceiving unit receiving data error check values from the plurality of the protocol processing units and selecting one of the protocol processing units corresponding to the protocol of the received signal, based on the data error check value.

2. The contactless IC card (200) of claim 1, further comprising a switching unit (230) for deciding a data transmit path to selectively transmit the signal from the card terminal to the protocol processing unit (240, 250, 260) selected by the protocol selecting unit (220).

3. The contactless IC card (200) of claim 2, wherein the switching unit (230) switches the plurality of the protocol processing units (240, 250, 260) until one of the protocol processing units is selected at a predetermined cycle in response to the protocol selecting unit (220).

4. The contactless IC card (200) of any one of claims 1 to 3, wherein the transceiving unit (210) includes an antenna coil winded by thin wire for generating an inductive power in response to a radio frequency signal from the card terminal.

5. The contactless IC card (200) of any one of claims 1 to 3, wherein the protocol processing unit (240, 250, 260) includes:
a memory (243) for storing a signal received at the corresponding protocol processing unit from the card terminal and a signal transmitted to the card terminal from the protocol processing unit;
a modulating/demodulating unit (241) for modulating or demodulating a signal used in the protocol processing unit and another signal used in the card terminal using protocol information of corresponding protocol processing unit;
a data detecting unit (242) for extracting essential information from the information stored in the memory and transmitting the extracted information to the modulating/demodulating unit; and
an error checking unit (244) for checking an error on the modulated data and transmitting the result of the error checking to the protocol selecting unit.

6. The contactless IC card (200) of claim 5, wherein the error checking unit (242) performs CRC (cycle redundancy check) on the modulated data and feeds the result of the CRC back to
the protocol selecting unit (220).

7. A method of communicating between a card terminal (100) and a contactless IC card (200) comprising a plurality of protocol processing units (240, 250, 260) processing signals with a protocol dislike each other selected from a plurality of protocols, the method comprising the steps of:
a) transiting the state of the contactless IC card to a power-on state (S205) by generating an inductive power inside the contactless IC card In response to a radio frequency signal from the card terminal;
b) transmitting a request signal received from the card terminal to the plurality of the protocol processing units (S220), receiving data error check values from the plurality of the protocol processing units (S225) and selecting one of the protocol processing units corresponding to the protocol of the received signal, based on the data error check value (S230); and
c) performing operations to communicate with the card terminal using a protocol corresponding to the decided protocol processing unit (S235).

8. The method of claim 7, wherein the step b) includes the steps of:
b-1) transferring the request signal from the card terminal to a plurality of the protocol processing units (S220);
b-2) modulating the request signal based on a corresponding protocol at each of the protocol processing units;
b-3) performing an error checking process on the modulated request signal at each of the protocol processing units; and
b-4) selecting one of protocols that is used to transmit the request signal based on the result of performing the error check (S230).

9. The method of claim 8, wherein the error checking process is a cyclic redundancy check (CRC) performed on the modulated data.

10. A computer readable recording medium storing a program for communicating between a card terminal and a contactless IC card capable of using a plurality of protocols to communicate, comprising:
transmitting a request signal received from the card terminal to the plurality of the protocol processing units (S220), receiving data error check values from the plurality of the protocol processing units (S225) and selecting one of the protocol processing units corresponding to the protocol of the received signal, based on the data error check value (S230); and
performing operations to communicate between the card terminal and the contactless IC card using the protocol corresponding to the request signal based on the result of the determination (S235).

11. The computer readable recording medium of claim 10, wherein the determining of the protocol includes:
modulating the data signal using the plurality of protocols;
performing an error check on the modulated signals according to each of the protocols; and
transmitting the data signal using a protocol that does not generate an error based on the result of performing the error check.

## Patentansprüche

1. Kontaktlose IC-Karte (Karte für integrierte Schaltungen) (200), die eine Datenkommunikation unter Verwendung eines aus mehreren Protokollen ausgewählten Protokolls ausführen kann, mit:
einer Sende-/Empfangseinheit (210), um ein Funkfrequenzsignal zu/von einem Kartenanschluss unter Verwendung eines aus mehreren Protokollen ausgewählten Protokolls zu senden bzw. zu empfangen;
mehreren Protokollverarbeitungseinheiten (240, 250, 260), um ein über die Sende-/Empfangseinheit (210) empfangenes Signal in Übereinstimmung mit einem jeweils bezeichneten Protokoll zu verarbeiten; und
einer Protokollauswahleinheit (220), um ein über die Sende-/Empfangseinheit (210) empfangenes Anforderungssignal zu den mehreren Protokollverarbeitungseinheiten (240, 250, 260) zu senden;
**dadurch gekennzeichnet, dass** die Sende-/Empfangseinheit Datenfehler-Prüfwerte von den mehreren Protokollverarbeitungseinheiten empfängt und eine der Protokollverarbeitungseinheiten, die dem Protokoll des empfangenen Signals entspricht, anhand des Datenfehler-Prüfwerts auswählt.

2. Kontaktlose IC-Karte (200) nach Anspruch 1, die ferner eine Schalteinheit (230) enthält, um einen Datensendeweg zu bestimmen, um das Signal von dem Kartenanschluss wahlweise zu der durch die Protokollauswahleinheit (220) ausgewählten Protokollverarbeitungseinheit (240, 250, 260) zu senden.

3. Kontaktlose IC-Karte (200) nach Anspruch 2, wobei die Schalteinheit (230) zwischen den mehreren Protokollverarbeitungseinheiten (240, 250, 260) schaltet, bis eine der Protokollverarbeitungseinheiten in Reaktion auf die Protokollauswahleinheit (220) in einem vorgegebenen Zyklus ausgewählt wird.

4. Kontaktlose IC-Karte (200) nach einem der Ansprüche 1 bis 3, wobei die Sende-/Empfangseinheit (210) eine Antennenspule aufweist, die mittels eines dünnen Drahts gewickelt ist, um in Reaktion auf ein Funkfrequenzsignal von dem Kartenanschluss eine induktive Leistung zu erzeugen.

5. Kontaktlose IC-Karte (200) nach einem der Ansprüche 1 bis 3, wobei die Protokollverarbeitungseinheit (240, 250, 260) enthält:
einen Speicher (243), um ein bei der entsprechenden Protokollverarbeitungseinheit von dem Kartenanschluss empfangenes Signal und ein von der Protokollverarbeitungseinheit zu dem Kartenanschluss gesendetes Signal zu speichern;
eine Modulations-/Demodulationseinheit (241), um ein in der Protokollverarbeitungseinheit verwendetes Signal und ein in dem Kartenanschluss verwendetes weiteres Signal unter Verwendung von Protokollinformationen der entsprechenden Protokollverarbeitungseinheit zu modulieren oder zu demodulieren;
eine Datendetektionseinheit (242), um wesentliche Informationen aus den im Speicher gespeicherten Informationen zu extrahieren und um die extrahierten Informationen zu der Modulations-/Demodulationseinheit zu senden; und
eine Fehlerprüfeinheit (244), um einen Fehler in den modulierten Daten zu prüfen und um das Ergebnis der Fehlerprüfung zu der Protokollauswahleinheit zu senden.

6. Kontaktlose IC-Karte (200) nach Anspruch 5, wobei die Fehlerprüfeinheit (242) eine CRC (zyklische Redundanzprüfung) an den modulierten Daten ausführt und das Ergebnis der CRC zu der Protokollauswahleinheit (220) zurückschickt.

7. Verfahren zum Kommunizieren zwischen einem Kartenanschluss (100) und einer kontaktlosen IC-Karte (200), die mehrere Protokollverarbeitungseinheiten (240, 250, 260) enthält, die Signale mit einem jeweils unterschiedlichen Protokoll, das aus mehreren Protokollen ausgewählt ist, verarbeiten, wobei das Verfahren die folgenden Schritte umfasst:
a) Bewirken des Übergangs des Zustands der kontaktlosen IC-Karte in einen eingeschalteten Zustand (S205) durch Erzeugen einer induktiven Leistung in der kontaktlosen IC-Karte in Reaktion auf ein Funkfrequenzsignal von dem Kartenanschluss;
b) Senden eines Anforderungssignals, das von dem Kartenanschluss empfangen wird, zu den mehreren Protokollverarbeitungseinheiten (S220), Empfangen von Datenfehler-Prüfwerten von den mehreren Protokollverarbeitungseinheiten (S225) und Auswählen einer der Protokollverarbeitungseinheiten, die dem Protokoll des empfangenen Signals entspricht, anhand des Datenfehler-Prüfwerts (S230); und
c) Ausführen von Operationen, um mit dem Kartenanschluss unter Verwendung eines der bestimmten Protokollverarbeitungseinheit entsprechenden Protokolls zu kommunizieren (S235).

8. Verfahren nach Anspruch 7, wobei der Schritt b) die folgenden Schritte umfasst:
b-1) Übertragen des Anforderungssignals von dem Kartenanschluss zu mehreren der Protokollverarbeitungseinheiten (S220);
b-2) Modulieren des Anforderungssignals anhand eines entsprechenden Protokolls in jeder der Protokollverarbeitungseinheiten;
b-3) Ausführen eines Fehlerprüfprozesses an dem modulierten Anforderungssignal in jeder der Protokollverarbeitungseinheiten; und
b-4) Auswählen eines der Protokolle, das verwendet wird, um das Anforderungssignal zu senden, anhand des Ergebnisses der Ausführung der Fehlerprüfung (S230).

9. Verfahren nach Anspruch 8, wobei der Fehlerprüfprozess eine zyklische Redundanzprüfung (CRC) ist, die an den modulierten Daten ausgeführt wird.

10. Computerlesbares Aufzeichnungsmedium, das ein Programm speichert, um zwischen einem Kartenanschluss und einer kontaktlosen IC-Karte zu kommunizieren, die mehrere Protokolle für die Kommunikation verwenden kann, das enthält:
Senden eines Anforderungssignals, das von dem Kartenanschluss empfangen wird, zu den mehreren Protokollverarbeitungseinheiten (S220), Empfangen von Datenfehler-Prüfwerten von den mehreren Protokollverarbeitungseinheiten (S225) und anhand des Datenfehler-Prüfwerts Auswählen einer der Protokollverarbeitungseinheiten, die dem Protokoll des empfangenen Signals entspricht (S230); und
Ausführen von Operationen, um anhand des Ergebnisses der Bestimmung zwischen dem Kartenanschluss und der kontaktlosen IC-Karte unter Verwendung des Protokolls, das dem Anforderungssignal entspricht, zu kommunizieren (S235).

11. Computerlesbares Aufzeichnungsmedium nach Anspruch 10, wobei das Bestimmen des Protokolls umfasst:
Modulieren des Datensignals unter Verwendung der mehreren Protokolle;
Ausführen einer Fehlerprüfung an den modulierten Signalen in Übereinstimmung mit jedem der Protokolle; und
Senden des Datensignals unter Verwendung eines Protokolls, das keinen Fehler erzeugt, anhand des Ergebnisses der Ausführung der Fehlerprüfung.

## Revendications

1. Carte CI (circuit intégré) sans contact (200) capable de communication de données au moyen d'un protocole choisi parmi une pluralité de protocoles, comprenant :
une unité d'émission-réception (210) permettant d'émettre et de recevoir un signal de fréquence radio vers/en provenance d'un terminal de carte au moyen d'un protocole choisi parmi une pluralité de protocoles ;
une pluralité d'unités de traitement de protocole (240, 250, 260) permettant de traiter un signal reçu par l'intermédiaire de l'unité d'émission-réception (210) ; selon un protocole distingué respectivement ; et
une unité de sélection de protocole (220) permettant de transmettre un signal de demande reçu par l'intermédiaire de l'unité d'émission-réception (210) à la pluralité d'unités de traitement de protocole (240, 250, 260) ;
**caractérisée en ce que** l'unité d'émission-réception reçoit des valeurs de vérification d'erreur de données de la pluralité des unités de traitement de protocole et sélectionne l'une des unités de traitement de protocole correspondant au protocole du signal reçu, d'après la valeur de vérification d'erreur de données.

2. Carte CI sans contact (200) selon la revendication 1, comprenant en outre une unité de commutation (230) permettant de décider d'un chemin de transmission de données pour transmettre sélectivement le signal du terminal de carte à l'unité de traitement de protocole (240, 250, 260) choisie par l'unité de sélection de protocole (220).

3. Carte CI sans contact (200) selon la revendication 2, dans laquelle l'unité de commutation (230) commute la pluralité d'unités de traitement de protocole (240, 250, 260) jusqu'à ce que l'une des unités de traitement de protocole soit choisie à un cycle prédéterminé en réponse à l'unité de sélection de protocole (220).

4. Carte CI sans contact (200) selon l'une quelconque des revendications 1 à 3, dans laquelle l'unité d'émission-réception (210) inclut une bobine d'antenne autour de laquelle est enroulé un fil fin permettant de générer une puissance inductrice en réponse à un signal de fréquence radio en provenance du terminal de carte,

5. Carte CI sans contact (200) selon l'une quelconque des revendications 1 à 3, dans laquelle l'unité de traitement de protocole (240; 250, 260) inclut :
une mémoire (243) permettant de stocker un signal reçu au niveau de l'unité de traitement de protocole correspondante en provenance du terminal de carte et un signal transmis au terminal de carte en provenance de l'unité de traitement de protocole ;
une unité de modulation/démodulation (241) permettant de moduler ou démoduler un signal utilisé dans l'unité de traitement de protocole et un autre signal utilisé dans le terminal de carte au moyen d'informations de protocole de l'unité de traitement de protocole correspondante ;
une unité de détection de données (242) permettant d'extraire des informations essentielles à partir des informations stockées dans la mémoire et de transmettre les informations extraites à l'unité de modulation/démodulation ; et
une unité de vérification d'erreur (244) permettant de vérifier une erreur sur les données modulées et de transmettre le résultat de la vérification d'erreur à l'unité de sélection de protocole.

6. Carte CI sans contact (200) selon la revendication 5, dans laquelle l'unité de vérification d'erreur (242) effectue une CRC (vérification à redondance cyclique) sur les données modulées et fournit en retour le résultat de la CRC à l'unité de sélection de protocole (220).

7. Procédé de communication entre un terminal de carte (100) et une carte CI sans contact (200) comprenant une pluralité d'unités de traitement de protocole (240, 250, 260) traitant des signaux avec des protocoles différents les uns des autres choisis parmi une pluralité dé protocoles, le procédé comprenant les étapes consistant à :
a) transiter de l'état de la carte CI sans contact à un état de marche (S205) en générant une puissance inductrice à l'intérieur de la carte CI sans contact en réponse à un signal de fréquence radio en provenance du terminal de carte ;
b) transmettre un signal de demande reçu du terminal de carte à la pluralité d'unités de traitement de protocole (S220), recevoir des valeurs de vérification d'erreur de données de la pluralité d'unités de traitement de protocole (S225) et sélectionner une des unités de traitement de protocole correspondant au protocole du signal reçu, sur la base de la valeur de vérification d'erreur de données (5230) ; et
c) effectuer des opérations pour communiquer avec le terminal de carte au moyen d'un protocole correspondant à l'unité de traitement de protocole (S235) décidée.

8. Procédé selon la revendication 7, dans lequel l'étape b) inclut les étapes consistant à :
b-1) transférer le signal de demande du terminal de carte à une pluralité des unités de traitement de protocole (S220);
b-2) moduler le signal de demande sur la base d'un protocole correspondant au niveau de chacune des unités de traitement de protocole;
b-3) mettre en oeuvre un processus de vérification d'erreur sur le signal de demande modulé au niveau de chacune des unités de traitement de protocole; et
b-4) sélectionner un des protocoles qui est utilisé pour transmettre le signal de demande sur la base du résultat de la réalisation de la vérification d'erreur (S230).

9. Procédé selon la revendication 8, dans lequel le processus de vérification d'erreur est une vérification à redondance cyclique (CRC) effectuée sur les données modulées.

10. Support d'enregistrement lisible par ordinateur stockant un programme permettant de communiquer entre un terminal de carte et une Carte CI sans contact capable d'utiliser une pluralité de protocoles pour communiquer, comprenant :
la transmission d'un signal de demande reçu du terminal de carte à la pluralité d'unités de traitement de protocole (S220) ; la réception de valeurs de vérification d'erreur de données de la pluralité des unités de traitement de protocole (S225) et la sélection de l'une des unités de protocole correspondant au protocole du signal reçu, sur la base de la valeur de vérification d'erreur de données (5230) ; et
la mise en oeuvre d'opérations pour communiquer entre le terminal de carte et la carte CI sans contact au moyen du protocole correspondant au signal de demande sur la base du résultat de la détermination (S235).

11. Support d'enregistrement lisible par ordinateur selon la revendication 10, dans lequel la détermination du protocole inclut les sous-étapes consistant à :
moduler le signal de données en utilisant la pluralité de protocoles;
effectuer une vérification d'erreur sur le signal modulé selon chacun des protocoles; et
transmettre le signal de données au moyen d'un protocole qui ne génère pas d'erreur sur la base du résultat de la mise en oeuvre de la vérification d'erreur.
